# EUROPEAN PATENT APPLICATION

(11) **EP 4 793 758 A1**
(43) Date of publication of application: **19.08.2026**
(21) Application number: 25158073.4
(22) Date of filing: 14.02.2025
(51) Int. Cl.: G06F 8/34, G06F 21/12

(54) **LOW CODE DEVELOPMENT PLATFORMS**

(71) Applicant: Telefonaktiebolaget LM Ericsson (publ), 164 83 Stockholm (SE)
(72) Inventor: Franzon, Björn, Göteborg (SE)
(74) Representative: Ericsson

(57) **Abstract**

According to an aspect, there is provided a computer-implemented method for use in a low code development platform, LCDP (202, 406, 704). The LCDP (202, 406, 704) comprises a LCDP client instance (408) and a LCDP server instance (410). The LCDP server instance (410) comprises a configuration component (412), a workflow engine module (416), and a storage module (414). The configuration component (412), the workflow engine module (416) and the storage module (414) are abstracted from a framework of the LCDP (202, 406, 704). The method comprises receiving, at the configuration component (412), from a requesting entity, a trigger associated with a first executable application (108) that has been developed in the LCDP (202, 406, 704) and/or associated with accessing an application of the LCDP (112). The method further comprises transmitting, from the configuration component (412), to the storage module (414), a request for the source code of the first executable application (108) and/or the application of the LCDP (112). The method further comprises receiving, at the configuration component (412), the requested source code. The method further comprises determining, at the configuration component (412), an output to be provided to the requesting entity, based on the received source code. The method further comprises providing, to the requesting entity, the determined output.

## Description

### Technical Field

This disclosure relates to low code development platforms, and in particular to the obfuscation of certain elements of a low code development platform.

### Background

A low code development platform, LCDP, enables software applications to be created in a relatively simple and straight forward manner, often by users that do not have extensive coding skills. Software applications can be built up by dragging and dropping blocks in a graphical user interface, GUI, of the LCDP, with some coding if needed.

US 2021/255482 describes a low-code development platform configured to separate a control flow, being the order in which source code or executable code based on the source code is executed, from the actual execution of the source code/executable code so as to enable a user to define one without the other. "Phalake, Vaishali, et al. "Modernized Application Development Using Optimized Low Code Platform." 2022 2nd Asian Conference on Innovation in Technology (ASIANCON). IEEE, 2022, describes a low code system that optimizes generated source code using code optimization and python libraries. "Juhás, Gabriel, et al. "Low-code platforms and languages: the future of software development." 2022 20th International Conference on Emerging eLearning Technologies and Applications (ICETA). IEEE, 2022, discusses that a next generation low-code platform should provide an application builder that will generate code of the application in a supported low-code language.

### Summary

It is an object of the invention to provide enhanced security and user aspects of a computer-implemented method for use in a low code development platform, LCDP.

According to a first aspect, there is provided a computer-implemented method for use in a low code development platform, LCDP. The LCDP comprises a LCDP client instance and a LCDP server instance. The LCDP server instance comprises a configuration component, a workflow engine module, and a storage module. The configuration component, the workflow engine module and the storage module are abstracted from a framework of the LCDP. The method comprises receiving, at the configuration component, from a requesting entity, a trigger associated with a first executable application that has been developed in the LCDP and/or associated with accessing an application of the LCDP. The method further comprises transmitting, from the configuration component, to the storage module, a request for the source code of the first executable application and/or the application of the LCDP. The method further comprises receiving, at the configuration component, the requested source code. The method further comprises determining, at the configuration component, an output to be provided to the requesting entity, based on the received source code. The method further comprises providing, to the requesting entity, the determined output.

According to a second aspect, there is provided a computer program product comprising a computer readable medium having computer readable code embodied therein, the computer readable code being configured such that, on execution by a suitable computer or processor, the computer or processor is caused to perform the method according to the first aspect, or any embodiment thereof.

According to a third aspect, there is provided a system configured to perform the method according to the first aspect, or any embodiment thereof.

Certain embodiments may provide one or more of the following technical advantage(s). The disclosed techniques provide that an application user, accessing the executable application via a graphical user interface of the LCDP, will have no knowledge of the underlying LCDP, and allow the executable application to behave as if it has been built without a LCDP. The disclosed techniques also provide a LCDP that is configured to obfuscate, from a user of executable applications that have been developed in the LCDP, both the LCDP development environment, and the fact that the executable application itself has been written in low-code.

### Brief Description of the Drawings

Some of the embodiments contemplated herein will now be described more fully with reference to the accompanying drawings, in which:
Fig. 1(i)-(iii) provide an example of certain techniques described herein in operation;
Fig. 2 shows the architecture of an LCDP, and the architecture of a software application;
Fig. 3 is a flow chart illustrating a computer-implemented method for use in a low code development platform;
Fig. 4(i) shows an example method of a developer editing, via a first GUI of a LCDP, an executable application;
Fig 4(ii) shows a number of interactions that occur in a LCDP when a developer edits, via a first GUI of the LCDP, an executable application;
Fig. 5(i) shows an example method of an application user executing, via a first GUI of a LCDP, an executable application;
Fig 5(ii) shows a number of interactions that occur in the LCDP when an application user executes, via a first GUI of the LCDP, an executable application;
Fig. 6 shows an example architecture of an LCDP;
Fig. 7 shows an example architecture of a system;
Fig. 8 shows a method of building, deploying, and using a LCDP;
Fig. 9 shows a method 900 of building, deploying, and using an executable application, which has not been developed in a LCDP;
Fig. 10 is a signalling diagram showing a number of interactions between a LCDP client, a LCDP server, and an external system;
Fig. 11 is a signalling diagram showing a number of interactions between a LCDP client and a LCDP server;
Fig. 12 is a signalling diagram showing a number of interactions between a LCDP client, a LCDP server, and an external system;
Fig. 13 shows a graphical table, a table application configuration, table application data, and the architecture of a system;
Fig. 14 is a signalling diagram showing a number of interactions between a client, a server, and an external system;
Fig. 15 is a signalling diagram showing a number of interactions between a LCDP client and a LCDP server;
Fig. 16 is a signalling diagram showing a number of interactions between a LCDP client, a LCDP server, and an external system; and
Fig. 17 is a simplified block diagram of a system comprising a low code development platform, LCDP, client instance, and a LCDP server instance.

### Detailed Description

Some of the embodiments contemplated herein will now be described more fully with reference to the accompanying drawings. Embodiments are provided by way of example to convey the scope of the subject matter to those skilled in the art.

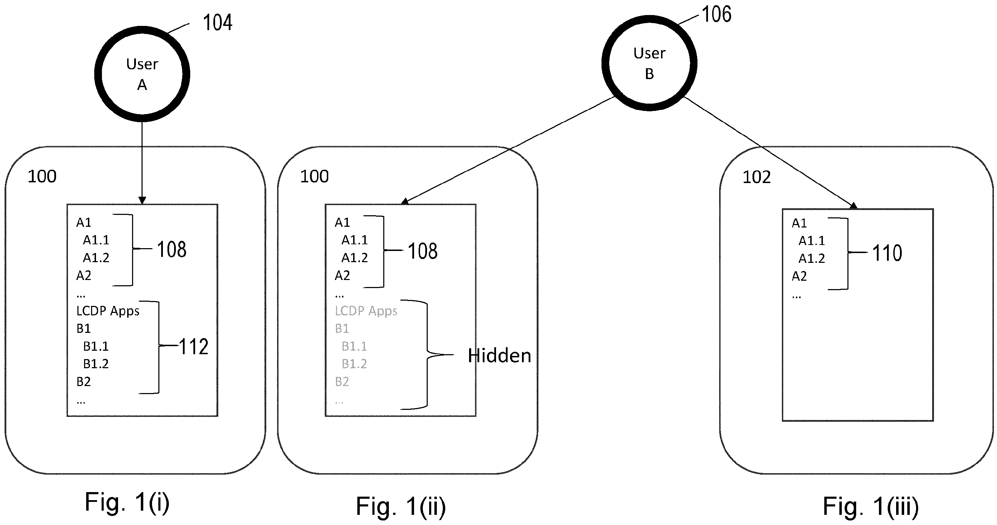

Fig. 1((i)-(iii)) provides an example of certain techniques described herein in operation. Fig. 1(i) shows a first graphical user interface, GUI, 100 of an LCDP, as visible to a developer of a software application 108 in the LCDP. Fig. 1(ii) shows the first GUI 100 of the LCDP, as visible to a user of the software application 108, that has been developed using the LCDP. Fig. 1(iii) shows a second GUI 102 of a software application 110, as visible to a user of the software application 110. In Fig. 1(iii), the software application 110 has the same functionality as the software application 108. However, the software application 108 has been built using any conventional language, and hence not by using the LCDP. The software application 110 and the second GUI 102 do not form part of the embodiments of the invention, and are provided for illustration of the benefits of embodiments of the invention.

Note that, as used herein, a "developer", or an "application developer" is someone who creates and/or modifies software applications in the LCDP. For example, a developer may be an application builder, such as User A 104 shown in Fig. 1. An application builder or developer, generally speaking, is able to read, write and edit, that is, change or make updates to, software applications and workflows associated with these software applications in the LCDP.

As used herein, an "application user" is someone who makes use of a completed software application in the LCDP, but is not permitted to create and/or modify software applications in the LCDP, for example, User B 106 shown in Fig. 1. An application user, generally speaking, is only permitted to read and execute software applications that have been developed in the LCDP, but not write or edit them.

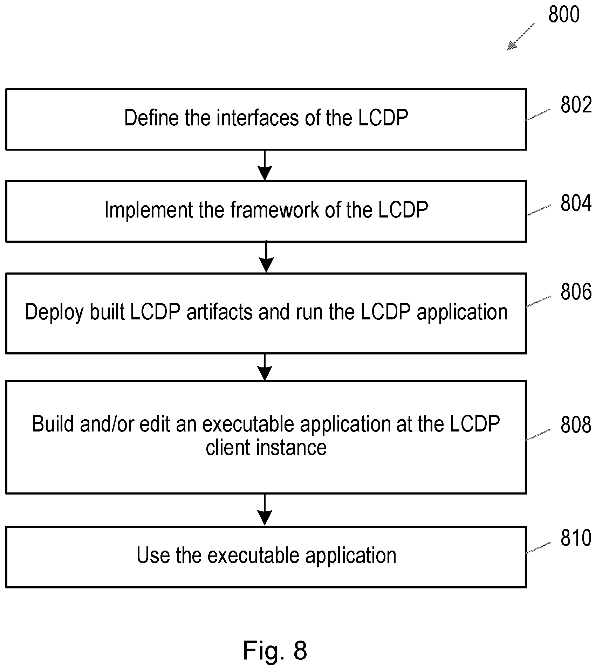

Separately, platform or framework developers, and interface developers are described, in contrast to a "developer", "application developer" or an "application builder" in the context of the present disclosure. An "interface developer" may define a standardized interface for a platform developer to integrate towards. A "platform developer" may create the LCDP infrastructure, as described in greater detail with reference to Fig. 8.

Fig. 1(i) shows the first GUI 100, as visible to User A 104. User A 104 is, a developer in the context of the present disclosure.. The first GUI 100 displays, to User A 104, both the software application 108 that has been developed in the LCDP, as well as the LCDP applications 112 themselves, for example, the applications of the LCDP, such as a workflow editor, that enable a developer to create and/or modify software applications in the LCDP itself. That is, the first GUI 100 displays, to User A 104, both the executable software application 108, as well as the underlying LCDP applications 112 that were used to develop the executable software application 108. In other words, the underlying LCDP framework is accessible to User A 104, via the first GUI 100.

Fig. 1(ii) shows the first GUI 100, as visible to User B 106. User B 106 is, an application user in the context of the present disclosure. The first GUI 100 displays, to User B 106, the software application 108 that has been developed in the LCDP, without displaying the LCDP applications 112 themselves, for example, the applications of the LCDP, such as a workflow editor, that enable a developer to create and/or modify software applications in the LCDP itself. That is, the first GUI 100 displays, to User B 106, the executable software application 108 that has been developed in the LCDP, without exposing the underlying LCDP framework itself, despite the underlying code and logical processing of the executable application 108 being in low code. User B 106 is unaware that the displayed executable software application 108 has been developed in the LCDP, and User B 106 has no awareness of the underlying LCDP when accessing the executable software application 108.

Figure 1(iii) shows the second GUI 102, as visible to User B 106. The second GUI 102 displays, to User B 106, the software application 110. From the perspective of User B 106, the first GUI 100 and the second GUI 102 display the same output. Hence, Fig. 1(ii) and Fig. 1 (iii) show that the application builder A, 104, may provide to an application user B, 106, an application 100 that has the exact same functionality as application 102, despite the differences in their development.

Therefore, the platform developer of the LCDP is able to build the LCDP such that, the first GUI 100 will display the same result, that is, the same pixels and business logic, for an application user, for example, User B 106, as the second GUI 102. Every pixel in both the first GUI 100 and the second GUI 102 will provide the same result to User B 106, and the functionality of both the first GUI 100 and the second GUI 102 will be the same to User B 106, despite the underlying code and logical processing of the executable application 108 in Fig. 1(ii) being in low-code.

Access control in the LCDP dynamically allows a user accessing the first GUI 100 to see, both the executable software application 108 and the LCDP applications 112, as is the case for User A 104, only the executable software application 108, as is the case for User B 106, or in some cases, a partial combination of the two. For example, user, role, and task-based access control may determine whether the LCDP applications 112 are visible to a user accessing the first GUI 100.

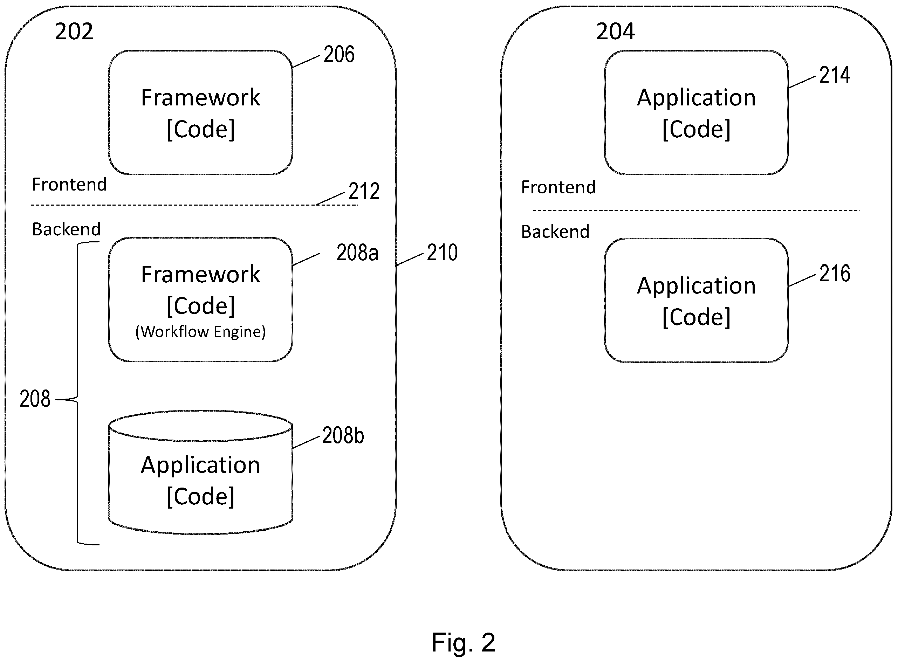

Fig. 2 shows the architecture of an LCDP 202, and the architecture 204 of the software application 110, that has not been developed in a LCDP, and is accessible via the second GUI 102.

The LCDP 202 comprises a frontend 206, a backend 208 comprising a workflow engine 208a and a storage module 208b, a wrapping 210, for example, a microservice, and a standardization interface 212. The frontend 206 of the LCDP 202 is visible to application users and developers of applications in the LCDP 202. The contents that is displayed by this frontend 206 will depend on whether an application user, or a developer, in the context of the present disclosure, is accessing it, as dictated by the access control of the LCDP 202 described above.

The architecture 204 of the software application 110, that may be build using any conventional language, for example, a 3GL, comprises a frontend 214, and a backend 216.

As noted above, for an application user, for example, User B 106, the frontend 206 of the LCDP 202, and the frontend 214 of the architecture 204, will display the same output.

In the LCDP 202, the dynamic parts of the executable software applications, that have been developed in the LCDP, are kept in the storage module 208b. For example, application configurations and executable source code are kept in the storage module 208b. The framework of the LCDP 202 itself is in the frontend 206 and the workflow engine 208a. In contrast, for the architecture 204, the application configuration, and the executable source code are stored in either the frontend 214, or the backend 216. It will be appreciated that the application configuration, and the executable source code in both the LCDP 202, and the architecture 204, contain similar contexts to provide the same end result, that is, functionality, to an application user, as shown in Figs 1(ii) and 1(iii).

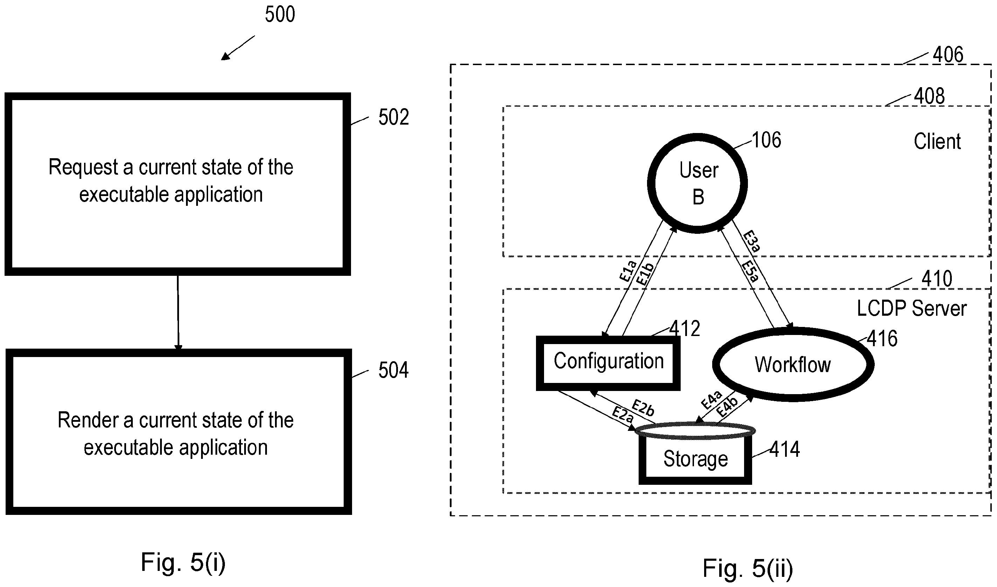

In order to execute an executable application in the LCDP 202, the stored source code for this executable application can be fetched by the backend 208 of the LCDP 202 and executed in the workflow engine 208a. This process is described in greater detail with reference to Fig. 5(i) below.

To enable a graphical user interface of the LCDP 202 to reproduce any functionality that a graphical interface for the software application 110 can produce, the framework of the LCDP 202 provides configuration options, but in a number of cases reproduces this functionality using triggers that are passed to the workflow engine 208a. These triggers, for example, may contain the current state of the executable application as an input. With a programming language in the editor, this allows the connected logic to be built.

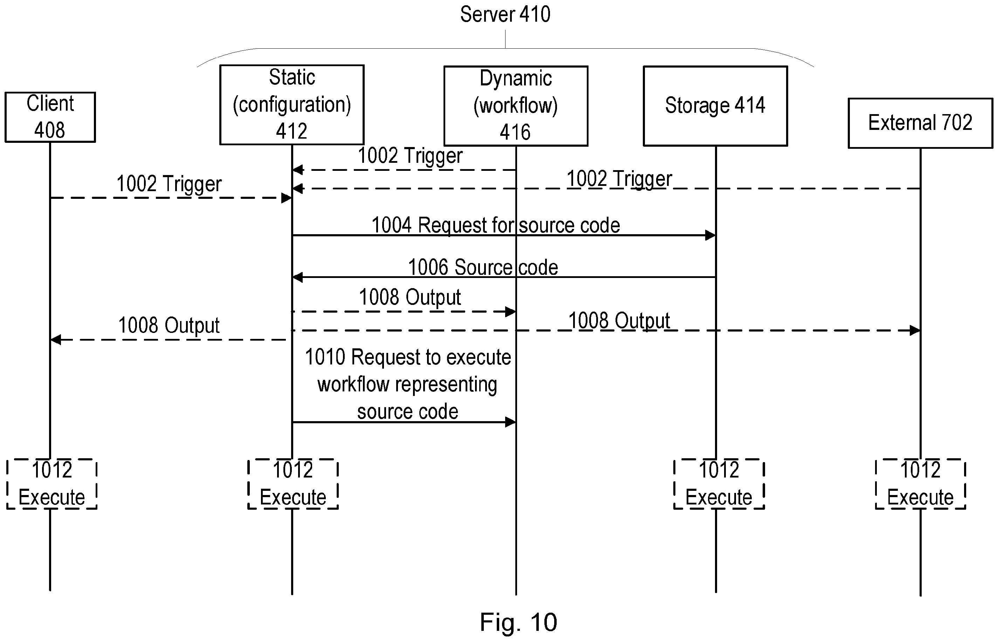

In the memory, all application code in storage 208b, enables instant feedback, where the graphical and logical building blocks are loosely coupled with drag-and-drop. The triggers are connectors between these building blocks, and the triggers and building blocks combined defines the Low-Code 4GL. This concept is further described with reference to Figs. 10 to 16.

The framework implementation of the LCDP 202 is able to evolve over time based on new requirements.

This LCDP 202 architecture enables drag and drop, runtime system, model driven architecture, event driven architecture, microservices, and rapid application development to build a 4th generation programming language.

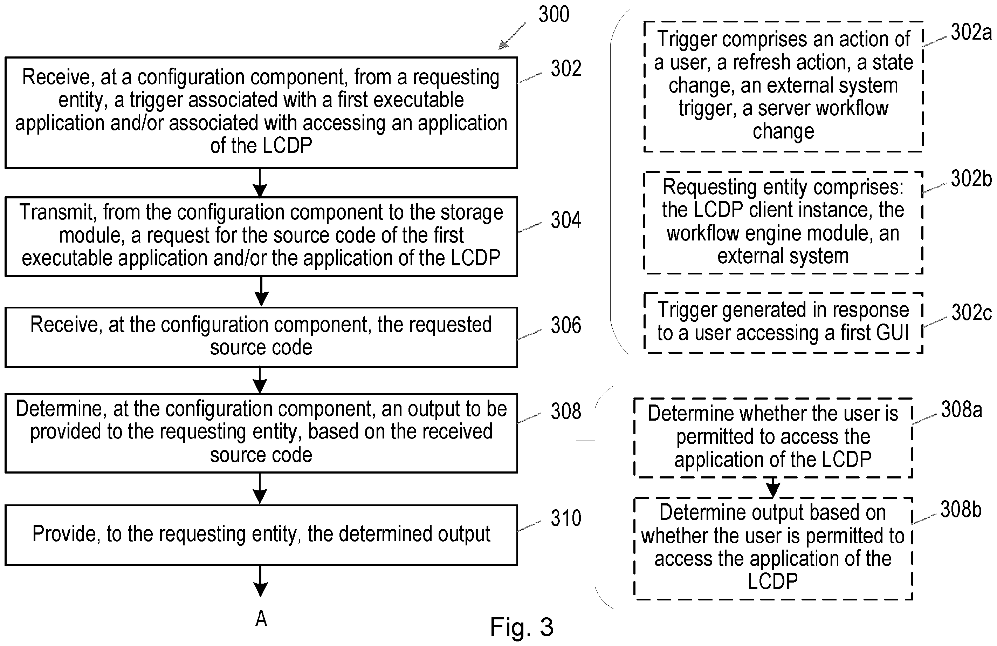

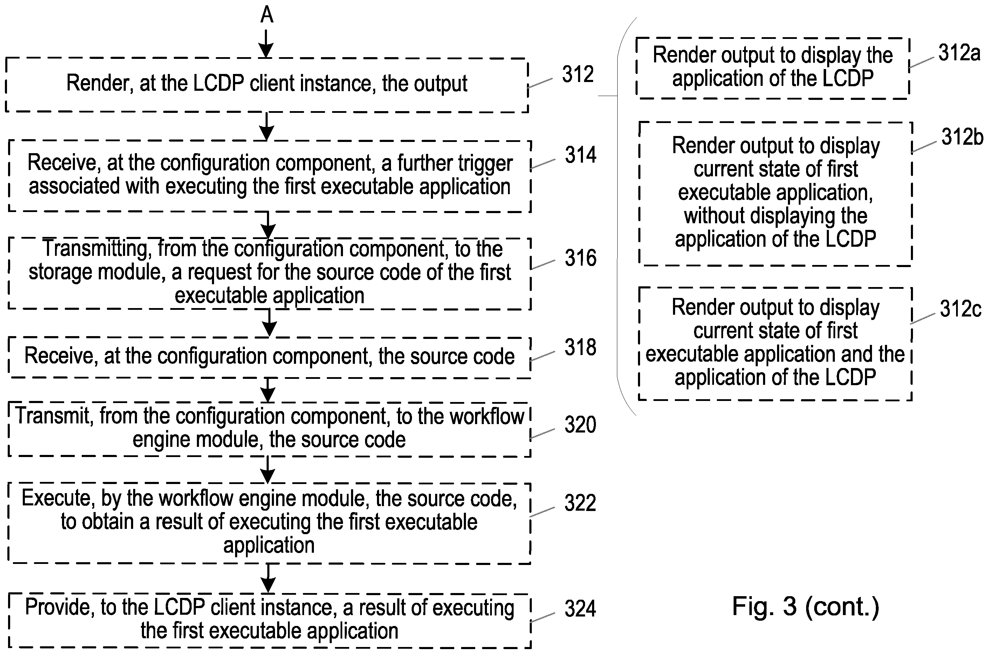

The LCDP standardization interface 212 enables multiple web software development kits, as well as native mobile applications, to connect to it using a common language. The interface 212 contains both an obfuscation communication protocol to obfuscate that the executable application has been developed in low code, from the perspective of User B, as well as an obfuscation LCDP protocol to obfuscate the LCDP 202 itself from User B. This obfuscation communication and obfuscation protocol shall be described in more detail in the following with respect to Fig. 3.

Fig. 3 is a flow chart illustrating a computer-implemented method 300 for use in a low code development platform, LCDP comprising a LCDP client instance and a LCDP server instance. The LCDP server instance comprises a configuration component, a workflow engine module, and a storage module, and the configuration component, the workflow engine module and the storage module are abstracted from a framework of the LCDP. For example, the configuration component, the workflow engine module and the storage module may be separate from the LCDP application itself, and may be constituted by configurable re-usable library modules. The configuration component, the workflow engine module and the storage module may represent an abstract layer of the LCDP, where a context received by the abstract layer is to be executed in the abstract layer, without the abstract layer binding to the context.

A system comprising a LCDP client instance and a LCDP server instance may perform the method in response to the LCDP client instance and the LCDP server instance executing suitably formulated computer readable code. The computer readable code may be embodied or stored on a computer readable medium, such as a memory chip, optical disc, or other storage medium. The computer readable medium may be part of a computer program product.

At step 302, the method 300 comprises receiving, at the configuration component, from a requesting entity, a trigger associated with a first executable application that has been developed in the LCDP and/or associated with accessing an application of the LCDP. The application of the LCDP may be, for example, a workflow editor application of the LCDP.

As shown at step 302a, the trigger may comprise, an action of a user of the LCDP client instance, a refresh action at the LCDP client instance, a state change, an external system trigger, or a server workflow change. A trigger associated with a first executable application that has been developed in the LCDP may be a trigger associated with obtaining a current state of the first executable application.

As shown at step 302b, the requesting entity may comprise the LCDP client instance, the workflow engine module, or an external system. In some embodiments, where the requesting entity comprises the LCDP client instance, as shown at step 302c, the trigger may be generated in response to a user accessing a first graphical user interface of the LCDP client instance. In these embodiments, the trigger may be associated with a first executable application that has been developed in the LCDP and associated with accessing an application of the LCDP.

At step 304, the method 300 comprises transmitting, from the configuration component, to the storage module, a request for the source code of the first executable application and/or the application of the LCDP. Whether the source code of the first executable application and/or the source code of the application of the LCDP, is requested, will depend on which application(s) the trigger relates to.

At step 306, the method 300 comprises receiving, at the configuration component, the requested source code.

At step 308, the method 300 comprises determining, at the configuration component, an output to be provided to the requesting entity, based on the received source code. An output may comprise a target, for example, a module identifier, and a related object, for example, an object, a string, a number, null, etc..., following a format that is known by the type of module the object belongs to.

At step 310, the method 300 comprises providing, to the requesting entity, the determined output.

At step 312, the method 300 may further comprise rendering, at the LCDP client instance, the output.

In some embodiments, where the trigger is associated with accessing an application of the LCDP, the step 308 may comprise determining, at the configuration component, based on one or more characteristics of the user, whether the user is permitted to access the application of the LCDP, as shown at step 308a. For example, if the user is an application developer, it may be determined that the user is permitted to access the application of the LCDP. If the user is an application user, it may be determined that the user is not permitted to access the application of the LCDP.

In response to determining that the user is permitted to access the application of the LCDP, at step 308b, the method 300 may comprise determining the output based on the received source code such that, when the output is rendered at the LCDP client instance, the LCDP client instance will display the application of the LCDP via the first graphical user interface. In these embodiments, user may be a LCDP application developer.

In these embodiments, the method 300 may further comprise, at step 312a, rendering, at the LCDP client instance, the output to display the application of the LCDP via the first graphical user interface. Therefore, in these embodiments, the LCDP application developer will be able to view and interact with the application of the LCDP via the first graphical user interface.

In these embodiments, the method 300 may further comprise, developing, by the user, via the first graphical user interface, a second executable application using the displayed application of the LCDP. That is, the LCDP application developer, having been provided to the application of the LCDP, is then able to develop and/or modify executable applications in the LCDP using this application via the first graphical user interface.

In some embodiments, where the trigger is associated the first executable application and associated with accessing the application of the LCDP. step 308 may comprise determining, at the configuration component, based on one or more characteristics of the user, whether the user is permitted to access the application of the LCDP, as shown at step 308a. In these embodiments, an application user or an application developer may wish to obtain a current state of the first executable application via the first graphical user interface. At step 308a, the method 300 may then determine whether the user is able to both obtain the current state of the first executable application and access the application of the LCDP, or only obtain the current state of the first executable application, based on one or more characteristics of the user.

In response to determining that the user is permitted to access the application of the LCDP, such as when the user is an application developer, the method 300 may comprise, at step 308b, determining the output based on the received source code such that, when the output is rendered at the LCDP client instance, the LCDP client instance will display the application of the LCDP and a current state of the first executable application, via the first graphical user interface.

In response to determining that the user is not permitted to access the application of the LCDP for example, where the user is an application user), the method 300 may comprise, at step 308b, determining the output based on the received source code such that, when the output is rendered at the LCDP client instance, the LCDP client instance will display the current state of the first executable application via the first graphical user interface, without displaying the application of the LCDP 112.

In response to receiving, at the LCDP client instance, an output that when rendered at the LCDP client instance will display the current state of the first executable application via the first graphical user interface, without displaying the application of the LCDP, the method 300 may further comprise, at step 312b, rendering, at the LCDP client instance, the output to display the current state of the first executable application via the first graphical user interface, without displaying the application of the LCDP. As noted in above, in these embodiments, the user is an application user. In these embodiments, the application user is able to obtain the current state of the first executable application via the first graphical user interface, with no knowledge of or access to the underlying LCDP applications.

In response to receiving, at the LCDP client instance, an output that when rendered at the LCDP client instance will display the application of the LCDP and the current state of the first executable application, via the first graphical user interface, the method 300 may comprise, at step 312c, rendering, at the LCDP client instance, the output to display the application of the LCDP and the current state of the first application via the first graphical user interface. In these embodiments, the user is a LCDP application developer. Therefore, in these embodiments, the LCDP application developer will be able to obtain the current state of the first executable application via the first graphical user interface, as well as view and interact with the application of the LCDP via the first graphical user interface. For example, the LCDP developer may view and/or modify the workflow of the first executable application, using the application of the LCDP that is displayed via the first graphical user interface.

In these embodiments, the method 300 may further comprise updating, by the user, via the first graphical user interface, a workflow representing the source code of the first executable application using the displayed application of the LCDP, and storing updated source code of the first executable application, representing the updated workflow, in the storage module.

In some embodiments, the method 300 may further comprise the following steps.

At step 314, the method 300 may comprise receiving, at the configuration component, a further trigger from the LCDP client instance, wherein the trigger is associated with executing the first executable application.

At step 316, the method 300 may comprise transmitting, from the configuration component, to the storage module, a request for the source code of the first executable application.

At step 318, the method 300 may comprise receiving, at the configuration component, the source code.

At step 320, the method 300 may comprise transmitting, from the configuration component, to the workflow engine module, the source code.

At step 322, the method 300 may comprise executing, by the workflow engine module, the source code, to obtain a result of executing the first executable application.

At step 324, the method 300 may comprise providing, to the LCDP client instance, a result of executing the first executable application to be displayed at the LCDP client instance via the first graphical user interface.

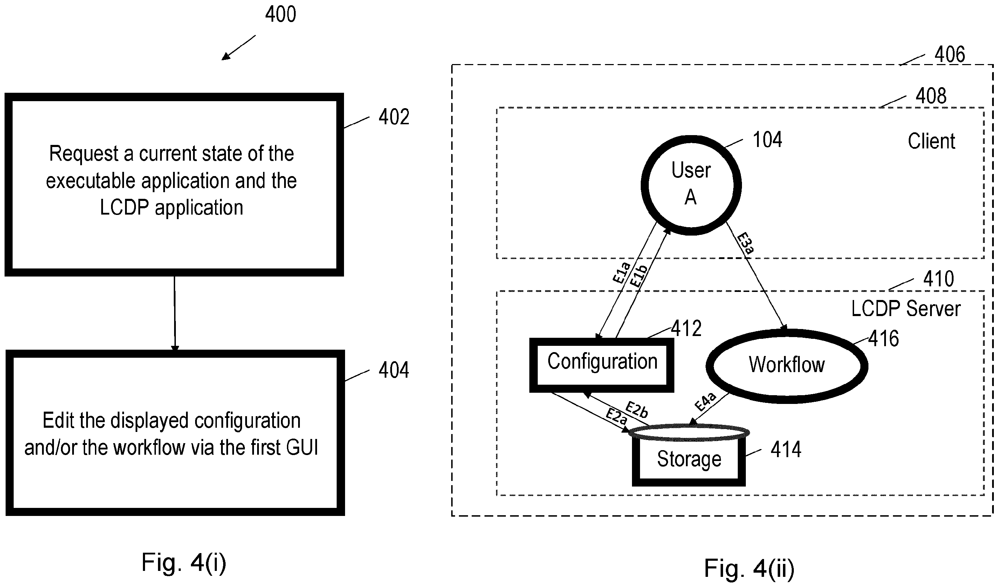

Fig. 4(i) shows an example method 400 of a developer, for example, User A 104 , editing, via a first GUI, for example, the first GUI 100, of a LCDP, an executable application that has been developed using the LCDP, according to the techniques described herein. Fig 4(ii) shows a number of interactions that occur in a LCDP 406 when the method 400 is executed. In this example, the LCDP 406 comprises LCDP client 408, and an LCDP server 410.

User A 104 has permission to edit executable application configurations, and to build workflows, as well as permission to access to the applications of the LCDP 406 itself, as shown in Fig. 1(i). At step 402 of the method 400, User A 104 requests a current state of the executable application and the LCDP application, for example, the workflow editor. A first graphical user interface at the LCDP client 408 then displays the current state of the executable application and the LCDP applications.

In order to allow a developer to edit the executable application in the LCDP 406, the first graphical user interface displays the configuration associated with the executable application, and the workflow representing the source code of the executable application. In order to display the configuration associated with the executable application, or a workflow representing the source code of the executable application, the LCDP client 408 sends a trigger, E1a, associated with the executable application to a configuration component 412 at the LCDP server 410. The configuration component 412 then sends a request, E2a, to a storage module 414 at the LCDP server 410, for either the configuration associated with the executable application, and/or the workflow representing the source code of the executable application. The storage module 414 then provides, at E2b, the configuration component 412 with the requested configuration, and/or the requested workflow. The configuration component 412 then provides, at E2a, the requested configuration and/or the requested configuration, to the LCDP client 408, to be displayed via the first graphical user interface.

At step 404 of the method 400, User A edits the displayed configuration, which is a static object, and/or the workflow in the dynamic programming language, via the first GUI. In other embodiments, the editing of the workflow and/or the configuration may be performed by an automated client, rather than via the first GUI.

In response to the configuration being edited in the first GUI, the updated configuration is transmitted to the configuration component 412 at E1c. The configuration component 412 then transmits, at E2, the updated configuration to the storage module 414. The storage module 414 then stores the updated configuration.

In response to the workflow being edited in the first GUI, the updated workflow is transmitted to the workflow engine 416, at E3a. The workflow engine 416 then transmits, at E4a, the updated workflow to the storage module 414. The storage module 414 then stores the updated source code of the executable application, which represents the updated workflow.

Fig. 5(i) shows an example method 500 of an application user, for example, User B 106, executing, via a first graphical user interface of a LCDP, an executable application that has been developed at the LCDP, according to the techniques described herein. Fig 5(ii) shows a number of interactions that occur in the LCDP 406 when the method 500 is executed.

In contrast to User A 104, User B 106 does not have permission to edit the configuration of the executable application, nor to build workflows, nor does User B 106 have permission to access the applications of the LCDP as shown in Fig. 1(ii).

At step 502 of the method 500, User B 106 requests a current state of the executable application.

In response to this request for the current state of the executable application, the LCDP client 408 transmits a first trigger, E1a, associated with the executable application, to a configuration component 412, and a second trigger, E3a, associated with executing the executable application, to the workflow engine 416.

In response to receiving the first trigger, the configuration component 412 sends a request, E2a, to the storage module 414 for the configuration associated with the executable application. The storage module 414 then provides, at E2b, the configuration component 412 with the requested configuration. The configuration component 412 then provides the data associated with the configuration, to the LCDP client 408, at E1b.

In response to receiving the second trigger, the workflow engine 416 sends a request, at E4a, to the storage module 414 for the workflow representing the source code of the executable application. The storage module 414 then provides, at E4b, the workflow engine 416 with the requested workflow. The workflow engine 416 then triggers execution of the workflow, to obtain a result. The result of executing the workflow is then transmitted to the LCDP client 408 via a message bus at E5a. As noted above, the access control in the LCDP 406 allows User B 106 to execute the workflow which has previously been created by User A 104, but does not allow User B 106 to view or edit the workflow.

At step 504, the LCDP client 408 then renders, based on the data associated with the configuration, and the result of executing the workflow, a current state of the executable application at the first GUI. As noted above, the first GUI, in this embodiment, will therefore mimic what is displayed to User B 106 via the second GUI 102 in Fig. 1(iii).

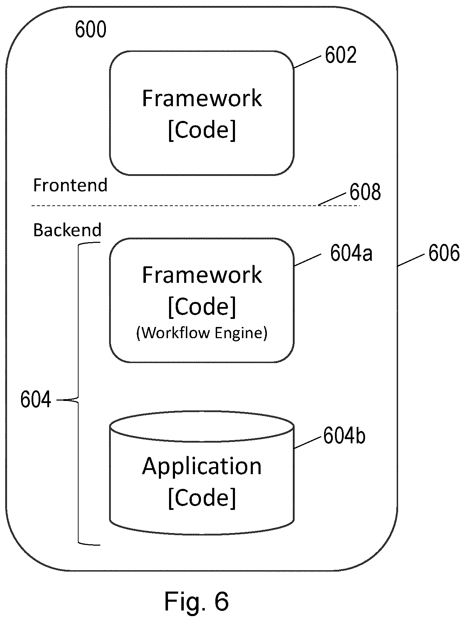

Fig. 6 shows an example architecture of an LCDP 600 according to certain embodiments of the present disclosure.

The framework of the LCDP 600 is a code repository implementing and expanding functionality in a generic platform. As shown in Fig. 6, the framework of the LCDP 600 comprises a frontend 602, a backend 604, the backend 604 comprising a workflow engine 604a and a storage module 604b, a wrapping 606, for example, a microservice, and a standardization interface 608. The frontend 602 of the framework is visible to application users and developers of applications in the LCDP 600. The contents that is displayed by this frontend 602 will be dependent on whether an application user, or a developer in the context of the present disclosure, is accessing it.

The workflow engine 604a is configured to execute the source code corresponding to a workflow of an executable application that has been developed or created by an application developer in the LCDP 600. This source code is stored in the storage module 604b. As described above, in response to receiving a trigger from a user, requesting execution of the executable application, the result of executing the source code of this executable application will then be displayed to the user via the frontend 602.

As noted above, an application user, accessing the frontend 602 of the LCDP 600, will only be able to see the result of a workflow representing an executable application having been executed, but not the workflow itself. Therefore, the application user, accessing the frontend 602 of the LCDP 600, will have no awareness that the executable application has been developed in the LCDP 600, or any awareness of the underlying LCDP 600 itself.

The main difference between the LCDP 600, compared to the architecture 204, as shown in Fig. 2, is that it is the LCDP 600, rather than the executable applications developed within it, that must comply with the standardization interface 608. An interface developer in the context of the present disclosure defines the standardization interface 608 for a platform developer, that is, a developer of the LCDP 600, to integrate towards.

The platform developer may decide to only implement a subset of the interface 608. For example, a native mobile application may not have the option to build new executable applications, but instead may rely on another frontend to provide that.

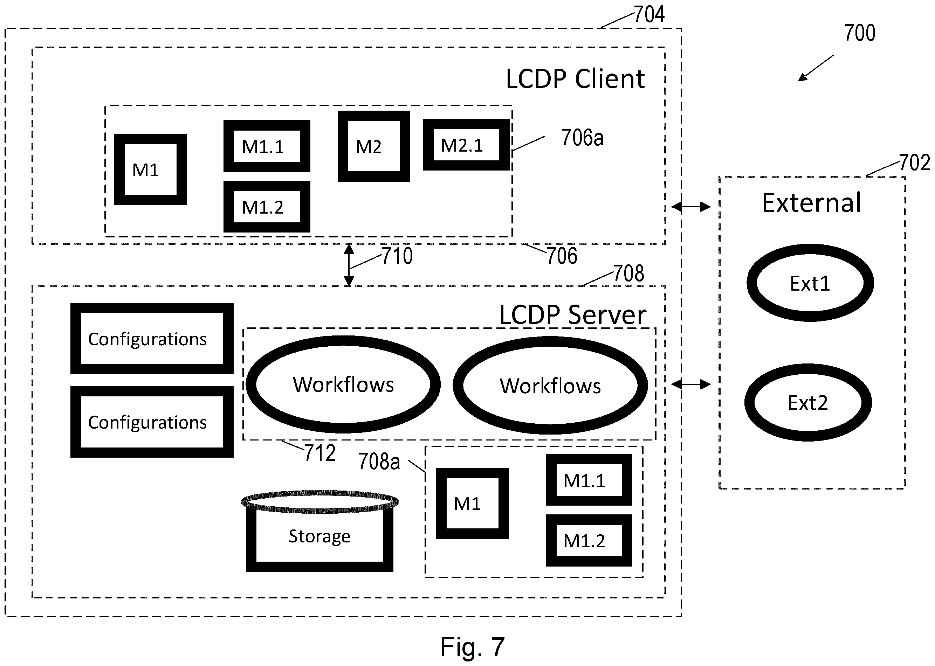

Fig. 7 shows an example architecture of a system 700, the system 700 comprising an external system 702, and a LCDP 704 according to certain embodiments described herein. In this example, the LCDP 704 comprises an LCDP client 706, and an LCDP server 708. The LCDP client 706 and LCDP server 708 communicate via a request and event bus interface 710.

The LCDP client 706 and the LCDP server 708 respectively contain loosely coupled modules, 706a, 708a, that are uniquely identified. In order to obfuscate what is displayed to an application user at a first graphical interface of the LCDP client 706, such that the first GUI mimics the second GUI 102 as shown in Fig. 1(iii) for the application user, the first GUI is mapped towards the framework modules of the LCDP 704, for example, the framework modules shown in Fig. 6. These modules have triggers for workflows that reproduce the dynamic business logic. Triggers can be added where required, such as from the server modules 708a and client modules 706a, workflows or the external system 702. Examples of triggers include refresh, user clicks, the execution of other workflows, or schedulers. These interactions represent a static part of the LCDP 704.

In the LCDP 704, the workflows that have been developed in the programming language of the LCDP 704 can be triggered by the LCDP server modules, and can interact and modify the LCDP server modules in the abstract low-code language of the LCDP 704. The abstract low-code language of the LCDP, the 4GL programming language, similar to a 3GL programming language, such as Java, Python, JavaScript, etc., it able to build programming logic without mixing with an application specific context.

The workflow abstract layer 712 of the LCDP server, has no binding to the modules that are updated in this manner, and in this example the workflow abstract layer 712 uses fire and forget event based architecture. These interactions represent a dynamic part of the LCDP 704.

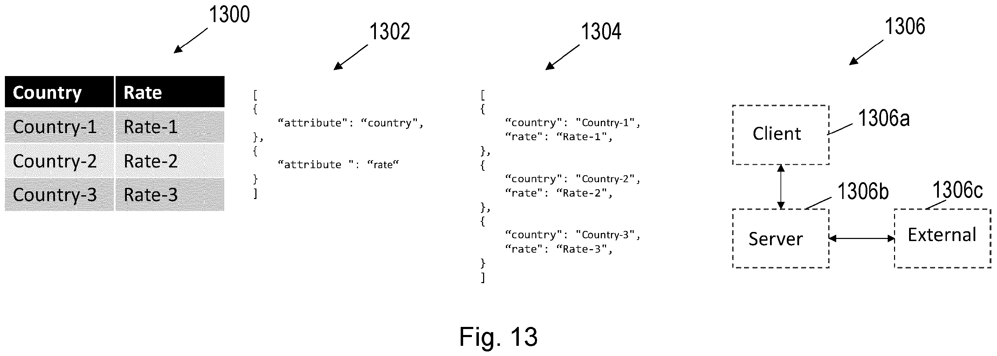

Fig. 7 shows a number of components each having a known identifier, a target, and a known input, an object. Each output has a target and an object. For example, the LCDP client modules 706a may be web components, each with a respective defined configuration format, for example, a table application configuration as described with reference to Fig. 13, and data format, for example, a table application data as described with reference to Fig. 13. The source code may be a normal programming language, for example, JavaScript, extended with strict low-code, that is, 4GL, rules.

Fig. 8 shows a method 800 of building, deploying, and using a LCDP, for example, the LCDP 202, the LCDP 406, or the LCDP 704, according to certain techniques described herein.

At step 802 of the method 800, an interface developer defines the interfaces of the LCDP.

At step 804 of the method 800, a platform developer implements the framework of the LCDP, following the standardization interfaces defined by the interface developer. In this example, the components of the LCDP framework, including the frontend, the backend, and the storage module, are abstracted from the LCDP application itself as configurable re-usable library modules.

At step 806 of the method 800, the platform developer takes the built LCDP artifacts, deploys them, and runs the LCDP application. For example, the LCDP application may be deployed as a LCDP client instance that is accessible to application developers and application users, and a LCDP server instance.

At step 808 of the method 800, while the LCDP application is running, an application developer builds and/or edits an executable application at the LCDP client instance, using a first graphical user interface of the LCDP client instance, for example, in accordance with the method 400 described above.

At step 810 of the method 800, an application user uses the executable application, built by the application developer. The application user accesses the executable application via the LCDP client instance, for example, in accordance with the method 500 described above. It will be appreciated that, at the first graphical user interface of the LCDP client instance, the application user be displayed a current state of the executable application, but the LCDP applications themselves will not be displayed, due to the obfuscation mechanisms described herein. Thus, the application user will have no knowledge of the obfuscated LCDP from the information that is displayed to them via the first graphical user interface.

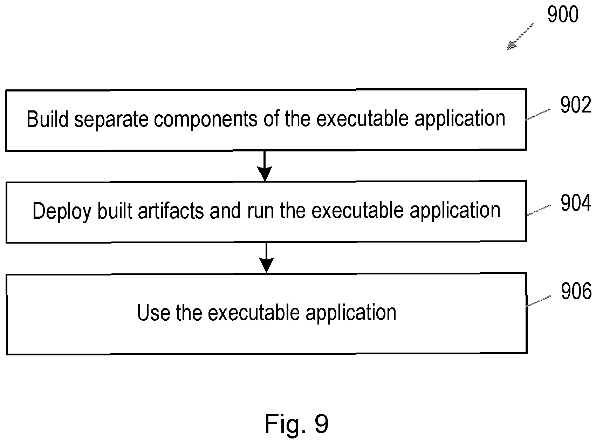

Fig. 9 shows a method 900 of building, deploying, and using an executable application, which has not been developed in a LCDP.

At step 902 of the method 900, an application developer builds separate components of the executable application itself, such as a fronted, a backend, and storage.

At step 904 of the method 900, the application developer takes the built artifacts, deploys them, and runs the executable application.

At step 906 of the method 900, an application user then uses the executable application that has been built at step 902.

An advantage of deploying the LCDP client instance and the executable application as a combined microservice, in contrast to the conventional application deployment described with reference to Fig. 9, is the increased speed at which an application developer may build applications in this combined microservice, which is approximately one hundred times faster primarily due to reduced cognitive load on the application developer. The low code environment provides the flexibility for the application developer to reproduce the same result as a coded application, such as the one described with reference to Fig. 9.

Fig. 10 is a signalling diagram showing a number of interactions between the LCDP client 408, the LCDP server 410, and the external system 702, according to certain techniques described herein.

In step 1002, the configuration component 412, which is a static element of the LCDP server 410, receives a trigger. This trigger may be received from the LCDP client 408, the workflow module 416, which is a dynamic element of the LCDP server 410, or the external system 702.

For example, a trigger that is received from the LCDP client 408, also referred to as a "client trigger", may be, a user action that is performed via a first graphical user interface of the LCDP client 408, or a refresh. A trigger that is received from the workflow module 416 may be sent in response a workflow being executed at the LCDP server 410, or a state change at the LCDP server 410.

The trigger contains a context to be executed in a known abstract 4GL layer of the LCDP 406, for example, at the workflow module 416, without binding to the context itself.

The trigger may be associated with an executable application that has been developed in the LCDP 406, for example, a request for a current state of the executable application, and/or associated with accessing an application of the LCDP 406, for example, a workflow editor application of the LCDP 406.

At step 1004, the configuration component 412 transmits, to the storage module 414, a request for the source code of the executable application, if the trigger is associated with the executable application, and/or the application of the LCDP 406, if the trigger is associated with the application of the LCDP 406.

At step 1006, the configuration component 412 receives from the storage module 414, the requested source code.

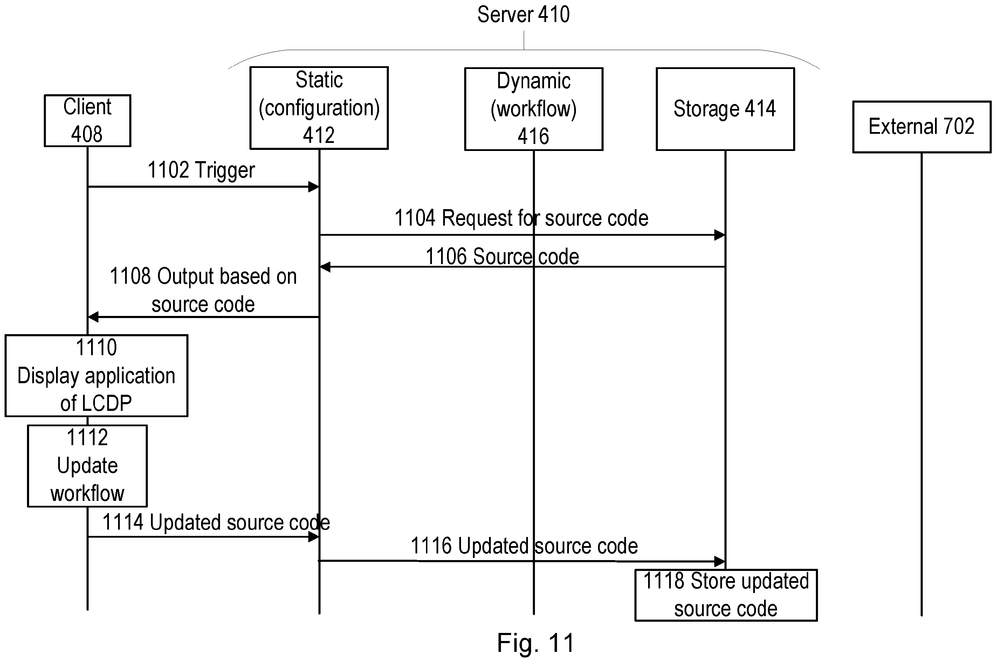

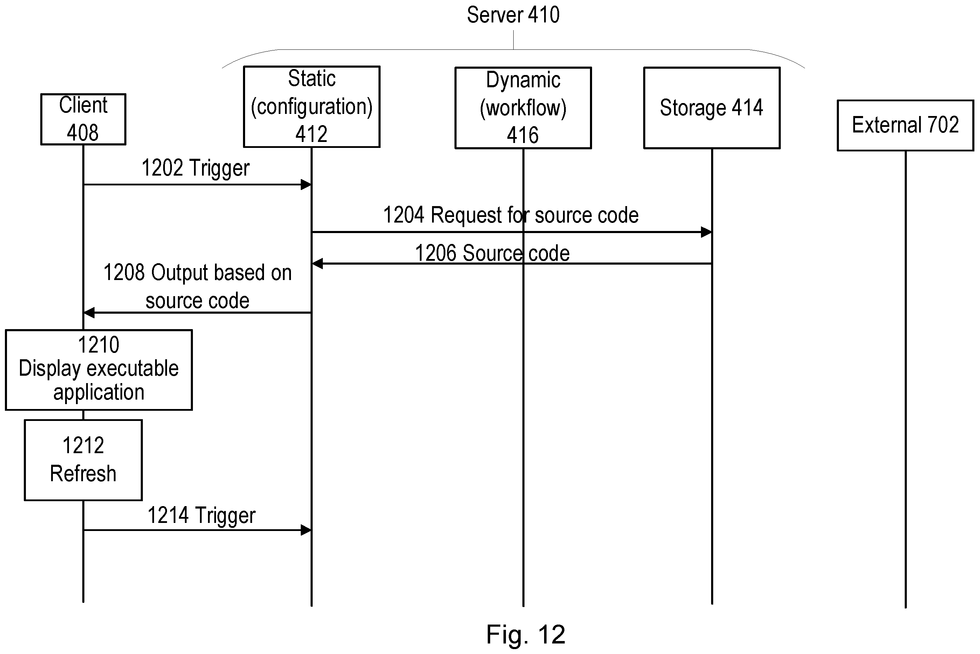

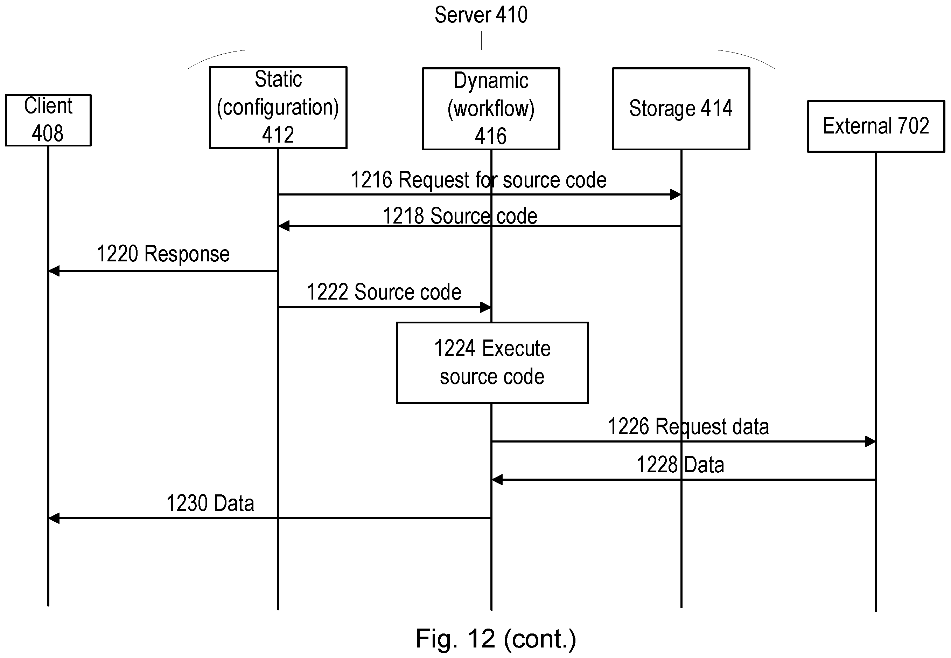

The configuration component 412 then, based on the received source code, determines an output to be provided to the requesting entity. For example, the configuration component 412 may determine the output based on whether a user of a first GUI of the LCDP client 408 is permitted to access the LCDP applications, or not, as described in greater detail with reference to Figs. 11 and 12.

At step 1008, the determined output is provided to the requesting entity, the entity that initially sent the trigger. It will be appreciated that this determined output will depend on the context included in the trigger that was received at step 1002, and may also depend on one or more properties associated with the requesting entity. For example, if the requesting entity was the LCDP client 408, and the trigger was associated with a user accessing the first GUI of the LCDP client 408, the determined output may depend on one or more characteristics of this user, and the output may be determined according to the access control of the LCDP 406 described herein. Where the requesting entity was the LCDP client 408, the determined output may comprise information to be rendered at the first GUI of the LCDP client 408.

At step 1010, the configuration component 412 may optionally transmit, to the workflow module 416, a request to execute a workflow representing the source code of the executable application, if the trigger related to executing the executable application.

At step 1012, in response to receiving this request, the workflow module 416 may execute the workflow, to obtain a result of executing the executable application. This may require the workflow module 416 to obtain the workflow from the storage module 414.

Optionally, the workflow module 416 may then transmit the result of executing the executable application to any of the configuration component 412, the LCDP client 408, or the external system 702. For example, the result of executing the executable application may be transmitted to the LCDP client 408, in order for the first GUI of the LCDP client 408 to render, to a user of the first GUI, a current state of the executable application.

Fig. 11 is a signalling diagram showing a number of interactions between the LCDP client 408, and the LCDP server 410, in order to enable an application developer to update an executable application via a first GUI of the LCDP client 408.

At step 1102, the application developer, for example, User A 104, opens an instance of the LCDP client 408, via a URL in a browser. This results in a trigger being sent, from the LCDP client 408, to a configuration component 412 of the LCDP server 410. In this example, the trigger is associated with accessing an application of the LCDP itself, and is associated with the executable application.

At step 1104, the configuration component 412 transmits, to the storage module 414, a request for the source code of the executable application and the application of the LCDP.

At step 1106, the configuration component 412 receives, from the storage module 414, the requested source code.

The configuration component 412 then determines, based on one or more characteristics of the user of the LCDP client 408, that is, the developer, whether the user of the LCDP client 408 is permitted to access the application of the LCDP. In this example, the developer is permitted to access the application of the LCDP.

In response to determining that the user of the LCDP client 408 is permitted to access the application of the LCDP, the configuration component 412 then determines the output based on the received source code such that, when the output is rendered at the LCDP client 408, the LCDP client 408 will display the application of the LCDP and a current state of the first executable application, via the first graphical user interface.

At step 1108, the configuration component 412 transmits, to the LCDP client 408, the determined output.

At step 1110, the LCDP client 408 then renders the output to display the application of the LCDP and the current state of the first application via the first graphical user interface.

The application developer then, via the first graphical user interface, at step 1112, updates a workflow representing the source code of the first executable application using the displayed application of the LCDP.

In response to the update, updated source code, representing the updated workflow, is then transmitted from the LCDP client 408 to the configuration component 412 at step 1114.

At step 1116, the configuration component 412 transmits the updated source code to the storage module 414. At step 1118, the storage module 414 stores the updated source code.

Fig. 12 is a signalling diagram showing a number of interactions between the LCDP client 408, the LCDP server 410, and the external system 702, in order to enable an application user to view a current state of an executable application via a first GUI of the LCDP client 408.

At step 1202, an application user, for example, User B 106, opens an instance of the LCDP client 408, via a URL in a browser. This results in a trigger being sent, from the LCDP client 408, to the configuration component 412. In this example, the trigger is associated with accessing an application of the LCDP itself, and is associated with the first executable application.

At step 1204, the configuration component 412 transmits, to the storage module 414, a request for the source code of the first executable application and the application of the LCDP.

At step 1206, the configuration component 412 receives, from the storage module 414, the requested source code.

The configuration component 412 then determines, based on one or more characteristics of the user of the LCDP client 408, that is, in this example, the application user, whether the user of the LCDP client 408 is permitted to access the application of the LCDP. In this example, the application user is not permitted to access the application of the LCDP.

In response to determining that the user of the LCDP client is not permitted to access the application of the LCDP, the configuration component 412 determines an output, based on the received source code, such that, when the output is rendered at the LCDP client 408, the LCDP client 408 will display the current state of the executable application via the first graphical user interface, without displaying the application of the LCDP.

At step 1208, the configuration component 412 transmits, to the LCDP client 408, the determined output.

At step 1210, the LCDP client 408 then renders the output to display the current state of the executable application via the first graphical user interface, without displaying the application of the LCDP. As noted above, from the information available to the application user via the first GUI, the application user has no knowledge of the underlying LCDP 406 itself, nor that the executable application was developed using the LCDP 406.

At step 1212, the application user triggers a refresh of the data displayed to them via the first GUI. This refresh causes, at step 1214, a second trigger to be transmitted, from the LCDP client 408 to the configuration component 412, where the second trigger is associated with executing the first executable application.

At step 1216, the configuration component 412 transmits, to the storage module 414, a request for the source code of the first executable application.

At step 1218, the configuration component 412 receives, from the storage module 414, the source code of the first executable application.

At step 1220, the configuration component 412 transmits, to the LCDP client 408, a response indicating that execution of the first executable application has begun.

At step 1222, the configuration component 412 transmits, to the workflow module 416, the source code.

At step 1224, the workflow module 416 executes the source code, to obtain a result of executing the first executable application. In this embodiment, executing the workflow causes, at step 1226, a third trigger to be transmitted to the external system 702, requesting data associated with the executable application. For example, this trigger may request data associated with a resource that is stored at the external system, which is required to display a current state of the executable application to the application user.

At step 1228, the external system 702 transmits, to the workflow module 416, the requested data.

At step 1230, the workflow module 416 transmits, to LCDP client 408, the requested data to be rendered at the LCDP client 408 in order to display a current state of the executable application via the first GUI. The LCDP client 408 is therefore provided the result of executing the first executable application, to be displayed at the LCDP client 408 via the first graphical user interface.

The LCDP 406 described herein therefore enables an application user, to use an executable application that has been developed in the LCDP 406, with no awareness of the underlying LCDP 406 itself, nor any awareness that the executable application was developed using the LCDP 406.

Fig 13. shows a graphical table 1300, which is displayed when a table application is rendered at a browser client. Fig. 13 also shows the table application configuration 1302, the table application data 1304, and the architecture of a system 1306 via which the table application may be accessed. The system 1306 comprises a client 1306a, the browser client, a server 1306b, and an external system 1306c from which the table application data 1304 may be obtained.

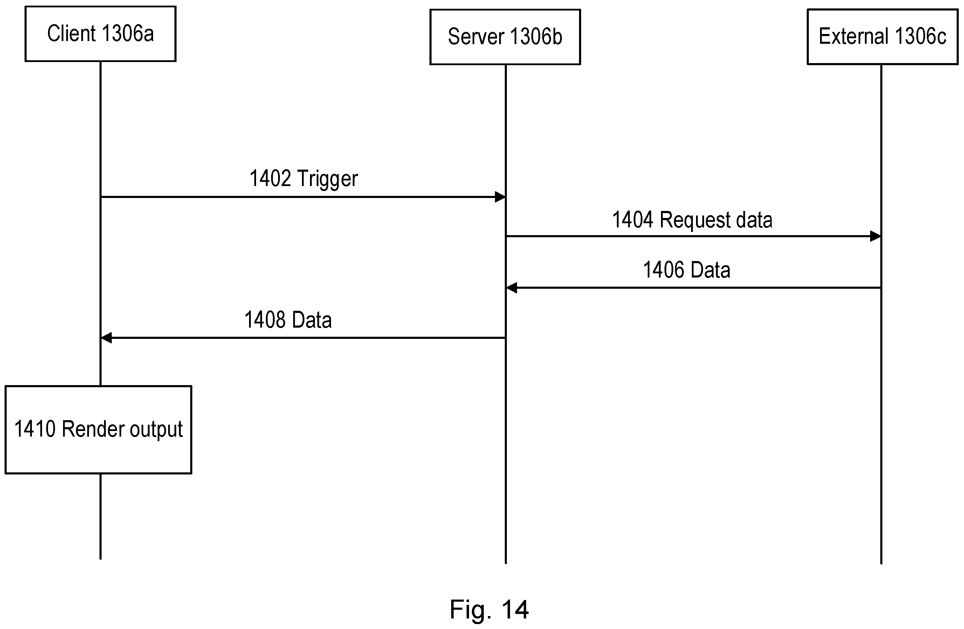

Fig. 14 is a signalling diagram showing a number of interactions between the client 1306a, the server 1306b, and the external system 1306c, in order to enable a user of the table application to view a current state of the table application via a GUI of the client 1306a. In this example, the table application has not been developed in a LCDP, and rather has been built and deployed according to steps 902 and 904 as shown in Fig. 9.

In this example, a content specific table is already part of the frontend of the table application, and the frontend contains the table application configuration 1302 shown in Fig. 13.

In step 1402, the client 1306a requests a content specific API call, which in this example results in the "getCountryTableData" trigger being transmitted from the client 1306a to the server 1306b.

At step 1404, the server 1306b transmits a request to the external system 1306c for the country data.

At step 1406, the external system 1306c transmits, to the server 1306b, the country data. This is the table application data 1304 shown in Fig. 13.

At step 1408, the server 1306b transmits the country data to the client 1306a. The client 1306a then, at step 1410, renders an output to be displayed at a graphical user interface of the client 1306a, such that the GUI displays the graphical table 1300 comprising this received country data.

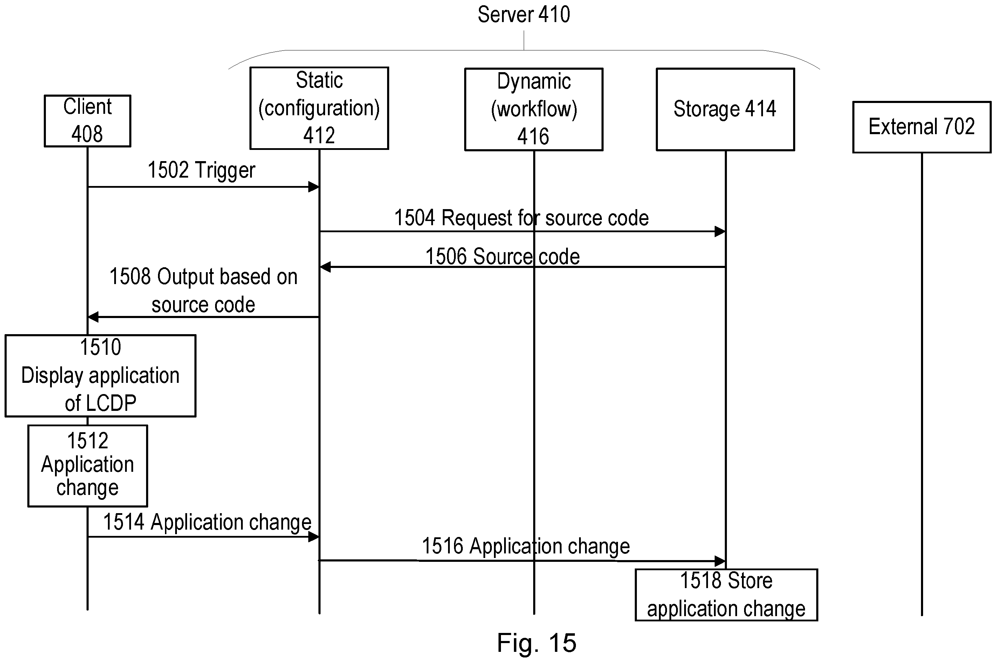

Fig. 15 is a signalling diagram showing a number of interactions between the client 1306a, the server 1306b, and the external system 1306c. In this example, the client 1306a is the LCDP client 408, the server 1306b is the LCDP server 410, and the table application has been developed in the LCDP 406. These interactions enable an application developer to build the table application via a first GUI of the LCDP client 408.

At step 1502, an application developer, for example, User A 104, opens an instance of the LCDP client 408, via a URL in a browser. This results in a trigger being sent, from the LCDP client 408, to the configuration component 412. In this example, the trigger is associated with accessing an application of the LCDP itself.

At step 1504, the configuration component 412 transmits, to the storage module 414, a request for the source code of the application of the LCDP.

At step 1506, the configuration component 412 receives, from the storage module 414, the requested source code.

The configuration component 412 then determines, based on one or more characteristics of the user of the LCDP client 408, that is, the developer, whether the user of the LCDP client 408 is permitted to access the application of the LCDP. In this example, the developer is permitted to access the application of the LCDP.

In response to determining that the user of the LCDP client 408 is permitted to access the application of the LCDP 406, the configuration component 412 then determines the output based on the received source code such that, when the output is rendered at the LCDP client 408, the LCDP client 408 will display the application of the LCDP 406, via the first graphical user interface.

At step 1508, the configuration component 412 transmits, to the LCDP client 408, the determined output.

The LCDP client 408 then, at step 1510, renders the output to display the application of the LCDP, via the first graphical user interface. This displays to the developer that a generic table component that enables the aforementioned table application to be built, is available.

The application developer then, at step 1512, via the first graphical user interface, uses this generic table component to edit and save an application change. In this example, the developer creates the table application configuration 1302 as shown in Fig. 13.

In response to this table component change, information representing this table component change is then transmitted from the LCDP client 408 to the configuration component 412 at step 1514.

At step 1516, the configuration component 412 transmits the information representing this table component to the storage module 414, where it is then stored at step 1518.

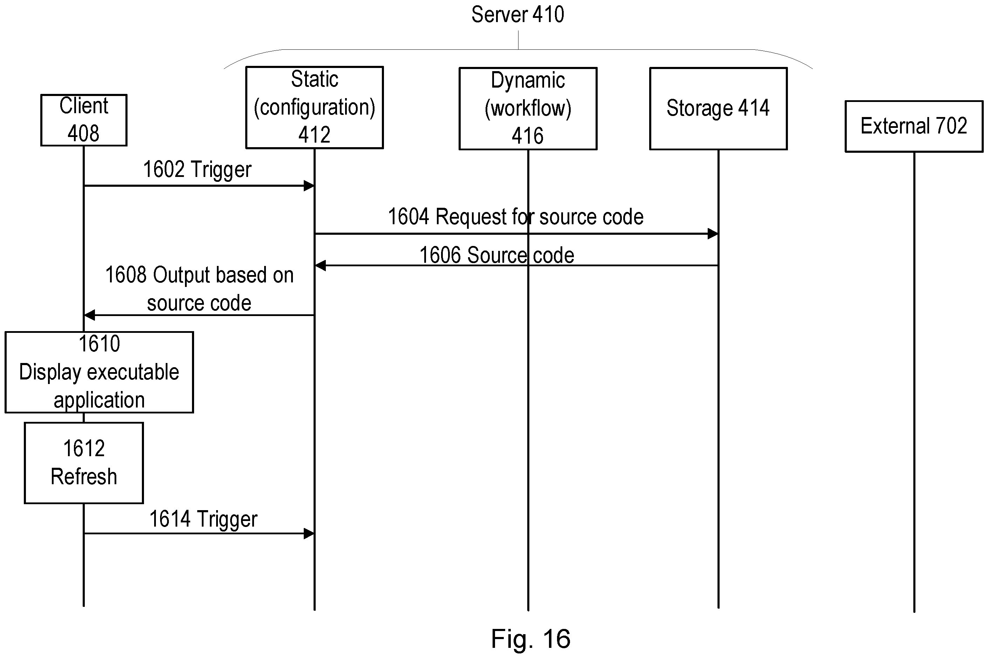

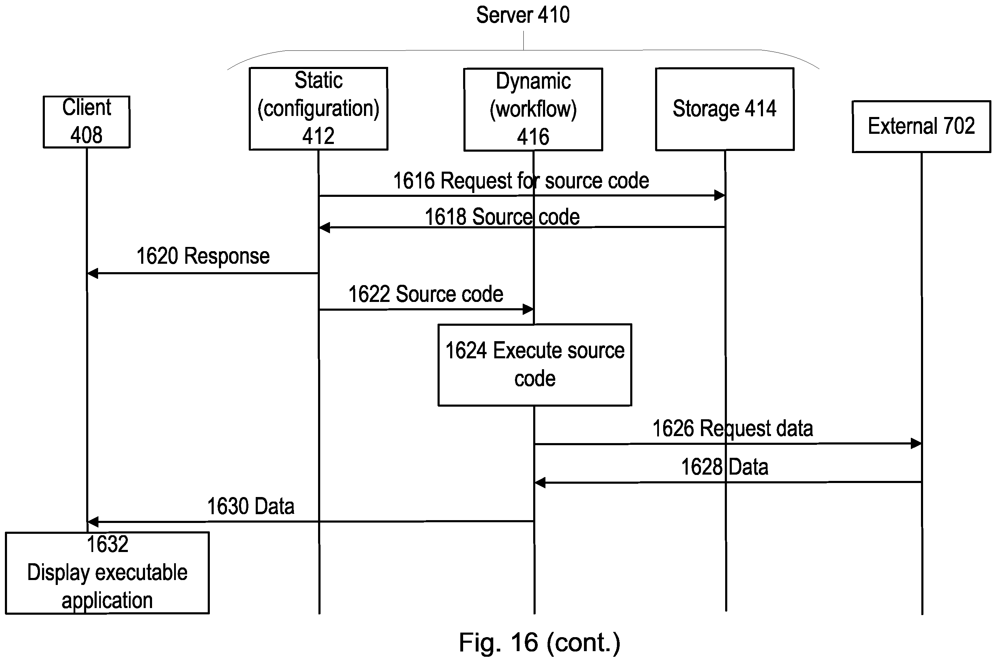

Fig. 16 is a signalling diagram showing a number of interactions between the client 1306a, the server 1306b, and the external system 1306c. In this example, the client 1306a is the LCDP client 408, the server 1306b is the LCDP server 410, and the table application has been developed in the LCDP 406. These interactions enable an application user to view a current state of the table application via a first GUI of the LCDP client 408.

At step 1602, an application user, for example, User B 106, opens an instance of the LCDP client 408, via a URL in a browser. This results in a trigger being sent, from the LCDP client 408, to the configuration component 412. In this example, the trigger is associated with accessing an application of the LCDP itself, and associated with the table application.

At step 1604, the configuration component 412 transmits, to the storage module 414, a request for the source code of the table application and the application of the LCDP.

At step 1606, the configuration component 412 receives, from the storage module 414, the requested source code. In this example, this source code includes the table application configuration 1302 shown in Fig. 13.

The configuration component 412 then determines, based on one or more characteristics of the user of the LCDP client 408, that is, in this example, the application user, whether the user of the LCDP client 408 is permitted to access the application of the LCDP. In this example, the application user is not permitted to access the application of the LCDP.

In response to determining that the user of the LCDP client 408 is not permitted to access the application of the LCDP, the configuration component 412 determines an output, based on the received source code, such that, when the output is rendered at the LCDP client 408, the LCDP client 408 will display the current state of the table application via the first graphical user interface, without displaying the application of the LCDP.

At step 1608, the configuration component 412 transmits, to the LCDP client 408, the determined output.

The LCDP client 408 then, at step 1610, renders the output to display the current state of the table application via the first graphical user interface, without displaying the application of the LCDP. The first GUI in this example therefore displays the graphical table 1300 shown in Fig. 13. It will be appreciated that this corresponds to what is displayed to the user of the client 1306a following step 1408 described above. Thus, the application user has no awareness of the underlying LCDP 406 itself, nor any awareness that the table application was developed using the LCDP 406.

The application user then, at step 1612, triggers a refresh of the data displayed to them via the first GUI. This refresh causes, at step 1614, a second trigger to be transmitted, from the LCDP client 408 to the configuration component 412, where the second trigger is associated with executing the table application. In this example, the second trigger is a "genericTrigger" that will always target the configuration component 412. However, the context of the trigger will depend on what the trigger relates to/what the trigger is requesting. In this example, the context of the trigger will relate refreshing the data displayed in the graphical table 1300.

At step 1616, the configuration component 412 transmits, to the storage module 414, a request for the source code of the table application.

At step 1618, the configuration component 412 receives, from the storage module 414, the source code of the table application.

At step 1620, the configuration component 412 transmits, to the LCDP client 408, a response indicating that execution of the table application has begun.

At step 1622, the configuration component 412 transmits, to the workflow module 416, the source code.

At step 1624, the workflow module 416 executes the source code, to obtain a result of executing the table application. This execution uses the context of the second trigger as an input. In this embodiment, executing the workflow causes, at step 1620, a third trigger to be transmitted, at step 1626, to the external system 1306c, requesting data associated with the table application, in order to refresh the displayed data. In this example, it is the table application data 1304 that is requested from the external system 1306c.

At step 1628, the external system 1306c transmits, to the workflow module 416, the requested data.

At step 1630, workflow module 416 transmits, to the LCDP client 408, the requested data to be rendered at the LCDP client 408 in order to display an updated state of the table application via the first GUI. The LCDP client 408 is therefore provided the result of executing the table application, to be displayed at the LCDP client 408 via the first graphical user interface. The first graphical user interface displays, at step 1632, to the application user, the graphical table 1300 comprising the table application data 1304 received from the external system 1306c.

The LCDP 406 described herein therefore enables an application user, to use the table application, which in this example has been developed in the LCDP 406, with no awareness of the underlying LCDP 406 itself, nor any awareness that the table application was developed using the LCDP 406.

In Fig. 13, the received data from the external system is usually required to be converted to the target component format 1302. This may be done in a normal programming language that follows a strict Low-Code structure.

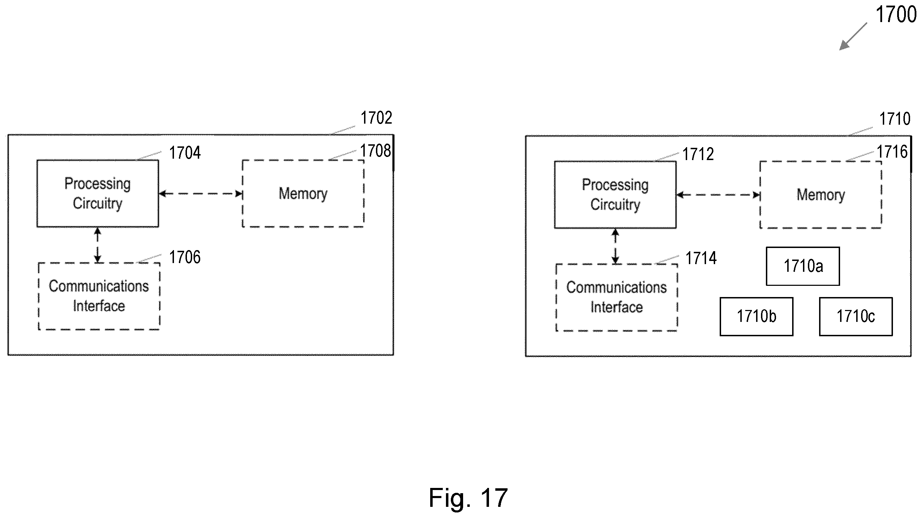

Fig. 17 is a simplified block diagram of a system 1700 comprising a low code development platform, LCDP, client instance 1702 of an LCDP, and a LCDP server instance 1710 of the LCDP. The LCDP server instance 1710 comprises a configuration component 1710a, a workflow engine module 1710b, and a storage module 1710c. The configuration component 1710a, the workflow engine module 1710b and the storage module 1710c are abstracted from a framework of the LCDP.

The system 1700 can be used to implement, or implement part of, the techniques described herein. In particular, the LCDP client instance may be, or be a part of, a computer or a server, and/or the LCDP server instance may be, or be a part of, a computer or a server. The system 1700 can be configured or adapted to perform the method according to any one or more of Figs. 3, 4(i), 5(i) or 8.

The LCDP client instance 1702 comprises processing circuitry (or logic) 1704. It will be appreciated that the LCDP client instance 1702 may comprise one or more virtual machines running different software and/or processes. The LCDP client instance 1702 may therefore comprise, or be implemented in or as one or more servers, switches and/or storage devices and/or may comprise cloud computing infrastructure that runs the software and/or processes.

The processing circuitry 1704 controls the operation of the LCDP client instance 1702 to implement, or implement part of, the techniques described herein with respect to a LCDP client instance. The processing circuitry 1704 can comprise one or more processors, processing units, multi-core processors or modules that are configured or programmed to control the LCDP client instance 1702 in the manner described herein. In particular implementations, the processing circuitry 1704 can comprise a plurality of software and/or hardware modules that are each configured to perform, or are for performing, individual or multiple steps of the method described herein in relation to the LCDP client instance 1702.

The LCDP client instance 1702 also comprises a communications interface 1706. The communications interface 1706 is for use in enabling communications with other computing device, nodes, computers, servers, etc. For example, the communications interface 1706 can be configured to transmit to and/or receive from other nodes, requests, acknowledgements, information, data, signals, or similar. The communications interface 1706 can use any suitable communication technology.

The processing circuitry 1704 may be configured to control the communications interface 1706 to transmit to and/or receive from other nodes, etc. requests, acknowledgements, information, data, signals, or similar, according to the methods described herein.

The LCDP client instance 1702 may comprise a memory 1708. In some embodiments, the memory 1708 can be configured to store program code that can be executed by the processing circuitry 1706 to perform the methods described herein in relation to the LCDP client instance 1702. Alternatively or in addition, the memory 1708 can be configured to store any requests, acknowledgements, information, data, signals, or similar that are described herein. The processing circuitry 1706 may be configured to control the memory 1708 to store such information therein.

Although the LCDP client instances described herein may include the illustrated combination of hardware components, other embodiments may comprise LCDP client instances with different combinations of components. It is to be understood that these LCDP client instances may comprise any suitable combination of hardware and/or software needed to perform the tasks, features, functions and methods disclosed herein. Moreover, while components are depicted as single boxes located within a larger box, or nested within multiple boxes, in practice, LCDP client instances may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hardwired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the LCDP client instance, but are enjoyed by the LCDP client instance as a whole, and/or by end users and a wireless network generally.

The LCDP server instance 1710 comprises processing circuitry (or logic) 1712. It will be appreciated that the LCDP server instance 1710 may comprise one or more virtual machines running different software and/or processes. The LCDP server instance 1710 may therefore comprise, or be implemented in or as one or more servers, switches and/or storage devices and/or may comprise cloud computing infrastructure that runs the software and/or processes.

The processing circuitry 1712 controls the operation of the LCDP server instance 1710 to implement, or implement part of, the techniques described herein with respect to a LCDP server instance. The processing circuitry 1712 can comprise one or more processors, processing units, multi-core processors or modules that are configured or programmed to control the LCDP server instance 1710 in the manner described herein. In particular implementations, the processing circuitry 1712 can comprise a plurality of software and/or hardware modules that are each configured to perform, or are for performing, individual or multiple steps of the method described herein in relation to the LCDP server instance 1710.

The LCDP server instance 1710 also comprises a communications interface 1714. The communications interface 1714 is for use in enabling communications with other computing device, nodes, computers, servers, etc. For example, the communications interface 1714 can be configured to transmit to and/or receive from other nodes, requests, acknowledgements, information, data, signals, or similar. The communications interface 1714 can use any suitable communication technology.

The processing circuitry 1712 may be configured to control the communications interface 1714 to transmit to and/or receive from other nodes, etc. requests, acknowledgements, information, data, signals, or similar, according to the methods described herein.

The LCDP server instance 1710 may comprise a memory 1716. In some embodiments, the memory 1716 can be configured to store program code that can be executed by the processing circuitry 1714 to perform the methods described herein in relation to the LCDP server instance 1710. Alternatively or in addition, the memory 1716 can be configured to store any requests, acknowledgements, information, data, signals, or similar that are described herein. The processing circuitry 1714 may be configured to control the memory 1716 to store such information therein.

Although the LCDP server instances described herein may include the illustrated combination of hardware components, other embodiments may comprise LCDP server instances with different combinations of components. It is to be understood that these LCDP server instances may comprise any suitable combination of hardware and/or software needed to perform the tasks, features, functions and methods disclosed herein. Moreover, while components are depicted as single boxes located within a larger box, or nested within multiple boxes, in practice, LCDP server instances may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hardwired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the LCDP server instance, but are enjoyed by the LCDP server instance as a whole, and/or by end users and a wireless network generally.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure. Various exemplary embodiments can be used together with one another, as well as interchangeably therewith, as should be understood by those having ordinary skill in the art.

## Claims

1. A computer-implemented method for use in a low code development platform, LCDP (202, 406, 704), the LCDP (202, 406, 704) comprising a LCDP client instance (408) and a LCDP server instance (410), the LCDP server instance (410) comprising a configuration component (412), a workflow engine module (416), and a storage module (414), wherein the configuration component (412), the workflow engine module (416) and the storage module (414) are abstracted from a framework of the LCDP (202, 406, 704), the method comprising:
receiving, at the configuration component (412), from a requesting entity, a trigger associated with a first executable application (108) that has been developed in the LCDP (202, 406, 704) and/or associated with accessing an application of the LCDP (112);
transmitting, from the configuration component (412), to the storage module (414), a request for the source code of the first executable application (108) and/or the application of the LCDP (112);
receiving, at the configuration component (412), the requested source code;
determining, at the configuration component (412), an output to be provided to the requesting entity, based on the received source code;
providing, to the requesting entity, the determined output.

2. The method of claim 1, wherein the trigger comprises: an action of a user (104, 106) of the LCDP client instance (408), a refresh action at the LCDP client instance (408), a state change, an external system trigger, or a server workflow change.

3. The method of claim 1 or 2, wherein the requesting entity comprises: the LCDP client instance (408), the workflow engine module (416), or an external system (702).

4. The method of claim 3, wherein the requesting entity comprises the LCDP client instance (408), and wherein the trigger is generated in response to a user accessing a first graphical user interface (100) of the LCDP client instance (408).

5. The method of claim 4, wherein the trigger is associated with accessing an application of the LCDP (112), wherein the step of determining comprises:
determining, at the configuration component (412), based on one or more characteristics of the user (104, 106), whether the user (104, 106) is permitted to access the application of the LCDP (112);
in response to determining that the user (104) is permitted to access the application of the LCDP (112), determining the output based on the received source code such that, when the output is rendered at the LCDP client instance (408), the LCDP client instance (408) will display the application of the LCDP (112) via the first graphical user interface (100).

6. The method of claim 5, the method further comprising:
rendering, at the LCDP client instance (408), the output to display the application of the LCDP (112) via the first graphical user interface (100).

7. The method of claim 6, the method further comprising:
developing, by the user (104), via the first graphical user interface (100), a second executable application using the displayed application of the LCDP (112).

8. The method according to claim 4, wherein the trigger is associated the first executable application (108) and associated with accessing the application of the LCDP (112), wherein the step of determining comprises:
determining, at the configuration component (412), based on one or more characteristics of the user (104, 106), whether the user (104, 106) is permitted to access the application of the LCDP (112);
in response to determining that the user (104) is permitted to access the application of the LCDP (112), determining the output based on the received source code such that, when the output is rendered at the LCDP client instance (408), the LCDP client instance (408) will display the application of the LCDP (112) and a current state of the first executable application (108), via the first graphical user interface (100); and
in response to determining that the user (106) is not permitted to access the application of the LCDP (112), determining the output based on the received source code such that, when the output is rendered at the LCDP client instance (408), the LCDP client instance (408) will display the current state of the first executable application (108) via the first graphical user interface (100), without displaying the application of the LCDP (112).

9. The method of claim 8, the method further comprising:
in response to receiving, at the LCDP client instance (408), an output that when rendered at the LCDP client instance (408) will display the application of the LCDP (112) and the current state of the first executable application (108), via the first graphical user interface (100),
rendering, at the LCDP client instance (408), the output to display the application of the LCDP (112) and the current state of the first application (108) via the first graphical user interface (100).

10. The method of claim 8, the method further comprising:
in response to receiving, at the LCDP client instance (408), an output that when rendered at the LCDP client instance (408) will display the current state of the first executable application (108) via the first graphical user interface (100), without displaying the application of the LCDP (112),
rendering, at the LCDP client instance (408), the output to display the current state of the first executable application (108) via the first graphical user interface (100), without displaying the application of the LCDP (112).

11. The method of claim 9, the method further comprising:
updating, by the user (104), via the first graphical user interface (100), a workflow representing the source code of the first executable application using the displayed application of the LCDP (112); and
storing updated source code of the first executable application, representing the updated workflow, in the storage module (414).

12. The method of claim 10, the method further comprising:
receiving, at the configuration component (412), a further trigger from the LCDP client instance (408), wherein the trigger is associated with executing the first executable application (108);
transmitting, from the configuration component (412), to the storage module (414), a request for the source code of the first executable application;
receiving, at the configuration component (412), the source code;
transmitting, from the configuration component (412), to the workflow engine module (416), the source code,
executing, by the workflow engine module (416), the source code, to obtain a result of executing the first executable application;
providing, to the LCDP client instance (408), a result of executing the first executable application to be displayed at the LCDP client instance (408) via the first graphical user interface (100).

13. The method of any preceding claim, wherein the user is a LCDP application developer (104).

14. The method of any of claims 8-12, wherein the user is an application user (106).

15. A computer program product comprising a computer readable medium having computer readable code embodied therein, the computer readable code being configured such that, on execution by a suitable computer or processor, the computer or processor is caused to perform the method (300) of any of claims 1-14.

16. A system (1700) comprising a low code development platform, LCDP, client instance (408) of an LCDP, and a LCDP server instance (410) of the LCDP, wherein the LCDP server instance (410) comprises a configuration component (412), a workflow engine module (416), and a storage module (414), and wherein the configuration component (412), the workflow engine module (416) and the storage module (414) are abstracted from a framework of the LCDP (202, 406, 704), the system (1700) being configured to:
receive, at the configuration component (412), from a requesting entity, a trigger associated with a first executable application (108) that has been developed in the LCDP (202, 406, 704) and/or associated with accessing an application of the LCDP (112);
transmit, from the configuration component (412), to the storage module (414), a request for the source code of the first executable application (108) and/or the application of the LCDP (112);
receive, at the configuration component (412), the requested source code;
determine, at the configuration component (412), an output to be provided to the requesting entity, based on the received source code; and
provide, to the requesting entity, the determined output.

17. The system (1700) of claim 16, wherein the system (1700) is further configured to perform the method (300) of any of claims 2-14.
